Europäisches Patentamt

European Patent Office

Office européen des brevets

(11) Veröffentlichungsnummer: **0 243 829**
**B1**

# EUROPÄISCHE PATENTSCHRIFT

(45) Veröffentlichungstag der Patentschrift:
07.11.90

(21) Anmeldenummer: 87105755.0

(22) Anmeldetag: 18.04.87

(51) Int. Cl.⁵: **G11B 5/708**, G11B 5/706,
G11B 5/72

(54) **Magnetische Aufzeichnungsträger.**

(30) Priorität: 26.04.86 DE 3614148

(43) Veröffentlichungstag der Anmeldung:
04.11.87 Patentblatt 87/45

(45) Bekanntmachung des Hinweises auf die Patenterteilung:
07.11.90 Patentblatt 90/45

(84) Benannte Vertragsstaaten:
DE FR GB NL

(56) Entgegenhaltungen:
EP-A- 0 207 391

PATENT ABSTRACTS OF JAPAN, Band 10,
Nr. 215 (P-481), 26. Juli 1986, Seite 96P481; & JP - A
- 61 54032 (FUJI PHOTO FILM CO LTD) 18.03.1986 (Kat.
A)
PATENT ABSTRACTS OF JAPAN, Band 10,
Nr. 237 (P-487), 15. August 1986, Seite 95P487; & JP - A
- 61 68728 (HITACHI MAXELL LTD) 09.04.1986 (Kat. A)
PATENT ABSTRACTS OF JAPAN, Band 9,
Nr 157 (P-369), 2. Juli 1985, Seite 15P369; & JP - A
- 60 032 122 (HITACHI MAXELL LTD) 19.02.1985

(73) Patentinhaber: BASF Aktiengesellschaft,
Carl-Bosch-Strasse 38, D-6700 Ludwigshafen(DE)

(72) Erfinder: Melzer, Milena, Kirchenstrasse 116,
D-6700 Ludwigshafen(DE)
Erfinder: Meyer, Bernd, Dr., Weschnitzaeckerstrasse 8,
D-6942 Moerlenbach(DE)
Erfinder: Sommermann, Friedrich, Dr.,
Grimmelshausenstrasse 9, D-7640 Kehi(DE)
Erfinder: Klumpp, Peter, Ludwig-Huber-Strasse 18,
D-7601 Hohberg(DE)
Erfinder: Kreitner, Ludwig, Dr., Liebigstrasse 10,
D-6148 Heppenheim(DE)
Erfinder: Lenz, Werner, Dr.,
Heinrich-Baermann-Strasse 14, D-6702 Bad
Duerkheim(DE)

## Beschreibung

Die Erfindung betrifft magnetische Aufzeichnungsträger, bestehend aus einem nichtmagnetischen Trägermaterial und mindestens einer darauf haftfest aufgebrachten magnetisierbaren Schicht auf der Basis von in einem Polymerbindemittel, Gleitmittel und weiteren Zusatzstoffen feinverteilten magnetischen Material, welche sich durch verminderte Reibungskoeffizienten verbessertes magnetisches Abriebverhalten im Feuchtklima und hohe Pegelstabilität auszeichnen.

Bei der Aufnahme und Wiedergabe von Signalen mittels magnetischer Aufzeichnungsträger, welche im Kontakt über den Magnetkopf geführt werden und zudem noch über Umlenkrollen, -bolzen oder andere Führungselemente bewegt werden, treten je nach Ausbildung der Schicht unter Umständen sehr hohe Reibungskräfte und häufig auch das sogenannte Rückgleiten bzw. der Stick-Slip-Effekt auf. Außerdem stellt der Abrieb bei der Benutzung solcher Aufzeichnungsträger nicht nur hinsichtlich der Lebensdauer sondern auch bezüglich der Betriebssicherheit ein Problem dar. Es ist daher üblich, den Schichtzusammensetzungen von magnetischen Aufzeichnungsträgern Gleitmittel zuzusetzen. Als geeignete Gleitmittel sind beispielsweise Polydimethylsiloxane, Paraffinöle, Wachse, gesättigte und ungesättigte Fettsäuren, Fettsäureester, Fettsäureamide, Salze von Fettsäuren, sowie feste Schmierstoffe, wie Molybdänsulfid, Graphit, Polytetraethylenpulver und Polytrichlorfluorethylenpulver bereits beschrieben. Auch wird angegeben, daß flüssige bzw. pastenförmige Gleitmittel gegenüber den festen Gleitmitteln den Vorteil besitzen, die zu schmierende Oberflächen mit einem homogenen dünnen Oberflächenfilm zu bedecken, wobei die mengenmäßige Zugabe an Gleitmittel sehr gering gehalten werden muß, da sonst die Oberfläche leicht klebrig wird. Diese Gleitmittel können jedoch häufig nicht als alleiniges Gleitmittel verwendet werden und werden deshalb mit festen oder pastenförmigen Gleitmitteln kombiniert. Bei Verwendung der vorgenannten Gleitmittel lassen sich bei vielen Anwendungsgebieten, insbesondere bei längerer Benetzungsdauer und ungünstigen Klimabedingungen weder das Sticken noch das Blocken und Verkleben der Bänder dauerhaft vermeiden. Auch läßt sich nicht verhindern, daß nach bereits kurzer Zeit die Bänder starke Abriebspuren zeigen, so daß die Wiedergabequalität besonders unter extremen Bedingungen merklich abnimmt.

Neben den genannten Schmiermitteln wurden auch solche aus tierischen und pflanzlichen Kohlenwasserstoffen vorgeschlagen. Die US-PS 3 144 352 beschreibt die Verwendung von Paraffinwachsen und in der US-PS 3 029 157 sind tierische und pflanzliche Fette als Schmiermittel bei Magnetogrammträgern eingesetzt. Aus der US-PS 3 492 235 ist es ferner bereits bekannt, Mischungen von Kohlenwasserstoffen und Estern als Schmiermittel in Magnetaufzeichnungsträgern zu verwenden. Die Zugabe von Estern von Fettsäuren und Monoalkoholen als Schmiermittel in Magnetaufzeichnungsträger, insbesondere Magnetbändern für die Aufzeichnung von Bildern, ist in der US-PS 3 274 111 offenbart. Dabei treten jedoch häufig Schwierigkeiten auf, die mit dem Ausschwitzen des Schmiermittels zusammenhängen. Diese Erscheinung des Ausschwitzens beruht darauf, daß viele handelsübliche Ester oder für die Herstellung dieser Ester verwendete Fettsäuren Mischungen von verschiedenen voneinander nur schwer zu trennenden Homologen darstellen, von denen einige bei der Verwendungstemperatur flüssig und andere fest sind.

In der DE-AS 22 50 382 wird die Gleitmittelkombination von Aminen mit Acrylsulfonsäuren, insbesondere die Kombination von Triethanolamindioleat mit Dodecylbenzolsulfonsäure beschrieben. Außerdem werden hierbei zusätzlich Weichmacher, die auch als Gleitmittel bekannt sind, zugesetzt. In der DE-OS 34 38 092 wird die Verwendung von Triethanolamindioleat in Kombination mit einem Dispergiermittel auf Acrylatbasis offenbart. Der Einsatz der Stearinsäure als Gleitmittel, allein oder auch in Kombination mit anderen, Schmierwirkung aufweisenden Stoffen bei der Herstellung von magnetischen Aufzeichnungsträgern ist ebenfalls bekannt. Ebenso bekannt ist die Zugabe von Zinkstearat, insbesondere bei Chromdioxid-enthaltenden magnetischen Aufzeichnungsträgern.

Die genannten Gleitmittel weisen jedoch meist den Nachteil auf, daß sie leicht aus der Magnetschicht ausschwitzen und bei extremen klimatischen Bedingungen zu Störungen beim Dauerbetrieb führen. Dadurch kommt es zu Ablagerungen an allen bandberührenden Teilen, besonders am Magnetkopf, wodurch Drop-outs und Pipelinebrüche auftreten.

Zu besonders starken Belastungen der magnetischen Aufzeichnungsträger kommt es unter tropischen Klimabedingungen mit Temperaturen von 35 bis 50°C, bei 90 % bis 95 % relativer Luftfeuchtigkeit. Aber auch niedrige Temperaturen, etwa 5°C, verbunden mit hoher Luftfeuchtigkeit können zu Störungen führen. Vor allem Temperaturwechsel, verbunden mit extrem hoher Luftfeuchte stellen hohe Anforderungen an die Qualität einer Magnetschicht.

Der Erfindung lag damit die Aufgabe zugrunde, magnetische Aufzeichnungsträger bereitzustellen, die bei wechselnden Umgebungstemperaturen, begleitet mit hoher relativer Luftfeuchte, sehr gutes Abriebverhalten aufweisen, so daß die Betriebssicherheit dieser Aufzeichnungsträger unter Beibehaltung der günstigen magnetischen Kenndaten, glatter Bandoberfläche und somit guten Aufzeichnungs- und Wiedergabeeigenschaften auch unter besonders schweren klimatischen Bedingungen wie beim Wechsel von hohen zu niederen Temperaturen bei gleichzeitig extrem hoher Luftfeuchte gewährleistet wird.

Es wurde nun überraschenderweise gefunden, daß magnetische Aufzeichnungsträger, bestehend aus einem nichtmagnetischen Trägermaterial und mindestens einer darauf aufgebrachten magnetisierbaren Schicht auf der Basis von in einem Polymerbindemittel, einem Gleitmittel und weiteren üblichen Zu-

2

satzstoffen feinverteilten magnetischen Material, die geforderten Eigenschaften aufweisen, wenn als weiterer Zusatzstoff eine Verbindung aus der Gruppe der Oxide, Hydroxide und Carbonate des Bariums und/oder Calciums in einer Menge von 0,5 bis 4 Gew.%, bezogen auf die Menge an magnetischem Material, zugesetzt wird. In einer besonderen Ausgestaltung werden 1 bis 2 Gew.% der entsprechenden Verbindung zugesetzt.

Im Rahmen der Erfindung hat es sich als besonders zweckmäßig herausgestellt, den angegebenen Zusatzstoff zusammen mit dem magnetischen Material und den übrigen Komponenten zu dispergieren. Es ist aber auch möglich, ihn in Form einer getrennt hergestellten Paste der Magnetdispersion zuzufügen. Mit gleichem Vorteil kann auch ein Gemisch der oben genannten Verbindungen zugefügt werden.

Als magnetisches Material wird bevorzugt feinteiliges stäbchenförmiges Gamma-Eisen(III)oxid mit einer durchschnittlichen Teilchengröße von 0,2 bis 2 µm und insbesondere von 0,1 bis 0,9 µm verwendet. Weitere geeignete magnetische Materialien sind Gamma-Eisen-(III)oxid mit Dotieren von Schwermetallen, insbesondere von Kobalt.

Als Bindemittel für die Dispersion des feinteiligen magnetischen Materials können die für die Herstellung von Magnetschichten bekannten Bindemittel verwendet werden, wie ein in üblichen Lösungsmitteln lösliches Copolyamid, ein Polyvinylformal, ein Polyurethanelastomeres, Mischungen von Polyisocyanaten und höhermolekularen Polyhydroxylverbindungen oder Vinylchloridpolymerisate mit über 60 % an Vinylchlorid-Molekülbausteinen, z.B. ein Vinylchloridcopolymerisat mit einem oder mehreren Comonomeren, wie ein Vinylester einer Monocarbonsäure mit 2 bis 9 C-Atomen, oder ein Ester eines aliphatischen Alkohols mit 1 bis 9 C-Atomen und einer ethylenisch ungesättigten Carbonsäure mit 3 bis 5 C-Atomen, wie die Ester der Acrylsäure, Methacrylsäure oder Maleinsäure, oder ein Copolymer des Vinylchlorids mit einer oder mehreren dieser Carbonsäuren selbst als Comonomeren oder hydroxylgruppenhaltige Vinylchloridcopolymerisate, die durch partielle Verseifung von Vinylchlorid-Vinylester-Copolymerisaten oder direkte Copolymerisation von Vinylchlorid mit hydroxylgruppenhaltigen Monomeren, wie Allylalkohol oder 4-Hydroxybutyl- oder 2-Hydroxyethyl-(meth)-acrylat hergestellt werden können. Ferner sind als Bindemittel geeignet Abmischungen von einem oder mehreren Polyurethanelastomeren mit Polyvinylformalen, Phenoxyharzen und PVC-Copolymerisaten der oben angegebenen Zusammensetzung. Als Polyurethanelastomer-Binder werden handelsübliche elastomere Polyesterurethane aus Adipinsäure, 1,4-Butandiol und 4,4'-Diisocyanatodiphenylmethan bevorzugt angewandt.

Ebenfalls vorteilhaft sind OH-gruppenhaltige Polyharnstoffurethanbindemittel, die mit Polyisocyanat vernetzt werden und wobei das OH-gruppenhaltige Polyharnstoffurethan durch Umsetzung eines Polydiols, eines Diols und eines primären oder sekundären Aminalkohols und gegebenenfalls eines Triols mit einem Diisocyanat erhalten wird.

Den Dispersionen können weitere bekannte Zusatzstoffe zur Verbesserung der Magnetschicht, beispielsweise geringe Monocarbonsäureanteile, Gemische oder Ester derselben sowie Füllstoffe, wie Ruß, Graphit, Quarzmehl und/oder nicht magnetisierbares Pulver auf Silicatbasis und Mittel zur Verbesserung des Verlaufs, wie geringen Mengen Siliconöl, zugesetzt werden. Diese Zusätze sollen zweckmäßigerweise insgesamt 12 Gewichtsprozent, bevorzugt 8 Gewichtsprozent, bezogen auf das Trockengewicht der Magnetschicht, nicht überschreiten.

Die Herstellung der Magnetschichten erfolgt in bekannter Weise. Hierzu wird das magnetische Material mit dem verwendeten Bindemittel, dem Dispergierhilfsmittel und ausreichend Lösungsmittel in einer Dispergiermaschine, z.B. einer Topfkugelmühle oder einer Rührwerkskugelmühle gegebenenfalls mit weiteren Zusatzstoffe dispergiert. Zur Einstellung des zweckmäßigen Bindemittel-Pigment-Verhältnisses können diese der Mischung entweder in festem Zustand oder in Form von 10- bis 60 %igen Lösungen bzw. 30- bis 60 %igen Dispersionen zugegeben werden. Es hat sich als zweckmäßig erwiesen, die Dispergierung solange fortzuführen, bis eine extreme feine Verteilung des magnetischen Materials erreicht ist, was 1 bis 7 Tage erfordern kann. Durch anschließendes wiederholtes Filtrieren erhält man eine völlig homogene Magnetdispersion.

Die Magnetdispersion wird nun mit Hilfe üblicher Beschichtungsmaschinen, z.B. mittels eines Linealgießers, auf den nichtmagnetisierbaren Träger aufgetragen. Als nichtmagnetische und nichtmagnetisierbare Träger lassen sich die üblichen Trägermaterialien verwenden, insbesondere Folien aus linearen Polyestern, wie Polyethylenterephthalat, im allgemeinen in Stärken von 4 bis 200 µm und insbesondere von 6 bis 36 µm. Bevor die noch flüssige Beschichtungsmischung auf dem Träger getrocknet wird, was zweckmäßigerweise bei Temperaturen von 50 bis 90°C während 2 bis 5 Minuten geschieht, werden anisotrope Magnetteilchen durch die Einwirkung eines Magnetfeldes entlang der vorgesehenen Aufzeichnungsrichtung orientiert.

Anschließend können die Magnetschichten auf üblichen Maschinen durch Hindurchführen zwischen geheizten und polierten Walzen, gegebenenfalls bei Temperaturen von 50 bis 100°C, vorzugsweise 60 bis 80°C, geglättet und verdichtet werden. Die Dicke der Magnetschicht beträgt im allgemeinen 1 bis 20 µm, vorzugsweise 2 bis 10 µm.

Die erfindungsgemäßen magnetischen Aufzeichnungsträger zeichnen sich gegenüber solchen nach dem Stand der Technik durch eine deutliche Überlegenheit hinsichtlich ihrer Lebensdauer unter extremen klimatischen Bedingungen aus. Außerdem sind die mechanischen Kenndaten, die Reibungswerte sowie die Eigenschaften bei Normalklima besonders günstig. Die magnetischen Eigenschaften, insbesondere die für die elektroakustischen Daten wichtigen Werte, wie Richtfaktor und remanente Magnetisierung, werden davon unabhängig weiterhin den gestellten hohen Anforderungen an solche magnetische Aufzeichnungsträger gerecht.

Die Erfindung wird anhand der folgenden Beispiele im Vergleich zu Versuchen nach dem Stand der Technik näher erläutert. Die in den Beispielen und Vergleichsversuchen genannten Teile und Prozente beziehen sich, soweit nicht anderes angegeben ist, auf das Gewicht.

Beispiele 1a bis 1c

In einer Stahlkugelmühle mit 6 l Rauminhalt, gefüllt mit 8 kg Stahlkugeln eines Durchmessers von 4 bis 6 mm, wurden 900 g eines aus $\alpha$-FeOOH hergestellten $\gamma$-Fe$_2$O$_3$ mit einer Koerzitivfeldstärke von 30 kA/m und einer spezifischen Oberfläche von 24 m$^2$/g, 41 g eines aus Oxoalkoholen (C$_{13}$-bis C$_{16}$-Fraktion), Ethylenoxid, Propylenoxid und Polyphosphorsäure hergestellten Dispergiermittels und (a) 4,5 g, (b) 9,0 g bzw. (c) 18 g Ba(OH)$_2$•8 H$_2$O zusammen mit 850 g eines Lösungsmittelgemisches aus gleichen Teilen Tetrahydrofuran und Dioxan, 276,9 g einer 13 %igen Lösung eines Polyesterpolyurethans vom K-Wert 60 (1 %ig in DMF), hergestellt aus einem Polyester aus Butandiol und Adipinsäure (0,42 Mol), Butandiol (0,55 Mol), Trimethylolpropan (0,03 Mol) und Diphenylmethandiisocyanat (1,05 Mol) in oben genanntem Lösungsmittelgemisch und 120,1 g einer 20 %igen Lösung eines Copolymers aus Vinylchlorid, Dimethylmaleinat und Diethylmaleinat im Verhältnis 80/10/10 und einem K-Wert von 60 in oben genanntem Lösungsmittelgemisch eingefüllt und 90 Stunden lang dispergiert. Dann wurden in der Nachphase 572 g Polyurethanlösung, 250 g Copolymerlösung, 0,9 g Silikonöl, 0,9 g Hydrochinon, 1,8 g n-Butylstearat und 9 g Isostearinsäure zugegeben. Nach 2 weiteren Stunden Dispergierzeit wurde die Dispersion aus der Mühle entnommen und unter Druck durch einen Filter mit 5 µm Poren filtriert. Nach der Filtration wurden unter kräftigem Rühren pro kg Dispersion 6,7 g einer 75 %igen Lösung eines Triisocyanats aus 3 Mol Toluylidendiisocyanat und 1 Mol Trimethylolpropan in Ethylacetat zugegeben. Unmittelbar danach wurde die Dispersion auf eine 12 µm dicke Polyethylenterephthalatfolie mittels eines üblichen Linealgießers aufgetragen. Die beschichtete Folie wurde nach Durchlaufen eines Magnetfeldes zum Ausrichten der Magnetteilchen bei Temperaturen zwischen 50 und 90°C getrocknet. Nach der Trocknung wurde die Magnetschicht durch Hindurchziehen zwischen auf 70°C beheizten Walzen unter einem Liniendruck von 300 kp/cm verdichtet und geglättet, so daß die Dicke der Magnetschicht 4,5 µm betrug und dann in 3,81 mm breite Bänder für Audioanwendung geschnitten.

Die Rauhigkeit R$_z$ der Magnetschicht wurde mit einem Perthometer der Fa. Perthen, Hannover gemessen. Die Messung der magnetischen Eigenschaften wurde in einem Meßfeld von 100 kA/m durchgeführt. Die elektroakustischen Werte wurden gemäß DIN 45 401, DIN 45 403 und DIN 45 512 Bl. 12 gegen das Bezugsband IEC I durchgeführt.

Die mechanischen Bandeigenschaften wurden nach folgenden Tests geprüft:

Reibungskoeffizient Schicht/Stahl:

Die Bestimmung der Reibungszahlen erfolgt nach DIN 45 522, Blatt 1.

Quasistatische Reibung:

Die Reibungszahl wird durch Messen einer Zugkraft bestimmt, die ein über eine feststehende Meßtrommel geführtes Magnetband durch Reibung erzeugt. Die Meßtrommel ist eine Stahltrommel mit einer Oberflächenrauhigkeit von ca. 0,15 µm und einem Durchmesser von 70 mm. Das Bandstück ist 25 cm lang und wird bei einem Bandzug von 20 cN mit einer Geschwindigkeit von 1 mm/s und einem Unschlingungswinkel von 180° über die Trommel geführt. Der Zug an der Meßdose F ist ein Maß für die Reibungszahl µ und zwar nach

$$\mu = \frac{1}{\pi} \cdot \ln \frac{F}{20}$$

Abriebverhalten am Recorder:

Die Zahl der Durchläufe am Recorder Typ Kennwood-Trio bis zum Pegelabfall > 2 dB wird als Lebensdauer angegeben; der dabei entstandene Abrieb am Löschkopf, Tonkopf und an der Tonwelle wird mittels Klebebandes abgezogen und nach einer Benotungsskala mit Zahlen von 1 (kein Abrieb) bis 6 (sehr starker Abrieb) benotet.

Wechselklimatest:

Auf einem Recorder werden mit den jeweiligen Prüfbändern gefüllte Compact-Cassetten abwechselnd bei 35°C, 90 % relative Luftfeuchte und 5°C, 80 % relative Luftfeuchte jeweils 5 Stunden lang betrieben. Dieses Zyklus wurde 4 x wiederholt. Die Recorder waren dabei mit Hartpermalloyköpfen versehen. Die Beurteilung der Lebensdauer geschieht durch die Ausfallzeiten, die in Prozent der vorgeschriebenen Prüfzeit angegeben wurden. Als Ausfall wurde ein Pegelabfall ≥ 6 dB länger als 5 s definiert.

Blockiertest nach Feuchtklimalagerung:

Die in Compact-Cassetten gefüllten Prüfbänder wurden 3 Tage bei 40°C und 93 % relative Luftfeuchte gelagert. Unmittelbar nach dieser Feuchtklimalagerung wurden sie bei Raumklima auf einem Recorder vom Typ Philips EL 3302A geprüft. Beurteilt wurde das Laufverhalten der Bänder bzw. der Abrieb nach einmaligem Durchlauf. Nach 24 Stunden Akklimatisierungszeit im Raumklima wurden sie erneut am gleichen Recorder geprüft.
Bewertung der Prüfergebnisse:
- Blocken am Recorder sowohl unmittelbar nach Feuchtklimalagerung als auch nach 24 Stunden Akklimatisierung im Raumklima: sehr schlecht.
- Blocken am Recorder unmittelbar nach Feuchtklimalagerung, nach 24 Stunden Akklimatisierung im Raumklima kein Blocken mehr, jedoch starker Abrieb: schlecht.
- Blocken am Recorder unmittelbar nach Feuchtklimalagerung, nach 24 Stunden Akklimatisierung im Raumklima problemloser Durchlauf ohne Abrieb: zufriedenstellend.
- Problemloser Durchlauf ohne Abrieb bereits unmittelbar nach Feuchtklimalagerung: sehr gut.
Die Prüfergebnisse sind in der Tabelle 1 angegeben.

Beispiele 2a bis 2c

Es wurde wie im Beispiel 1 beschrieben verfahren, jedoch wurde $Ca(OH)_2$ anstelle von $Ba(OH)_2 \cdot 8 H_2O$ verwendet. Die Prüfergebnisse sind in der Tabelle angegeben.

Beispiele 3a bis 3c

Es wurde wie in Beispiel 1 beschrieben verfahren, jedoch wurde BaO anstelle von $Ba(OH)_2 \cdot 8 H_2O$ verwendet. Die Prüfergebnisse sind in der Tabelle angegeben.

Beispiele 4a bis 4c

Es wurde wie in Beispiel 1 beschrieben verfahren, jedoch wurde CaO anstelle von $Ba(OH)_2 \cdot 8 H_2O$ verwendet. Die Prüfergebnisse sind in der Tabelle angegeben.

Beispiele 5a bis 5c

Es wurde wie in Beispiel 1 beschrieben verfahren, jedoch wurde $BaCO_3$ anstelle von $Ba(OH)_2 \cdot 8 H_2O$ verwendet. Die Prüfergebnisse sind in der Tabelle angegeben.

Beispiele 6a bis 6c

Es wurde wie in Beispiel 1 beschrieben verfahren, jedoch wurde $CaCO_3$ anstelle von $Ba(OH)_2 \cdot 8 H_2O$ verwendet. Die Prüfergebnisse sind in der Tabelle angegeben.

Vergleichsversuch 1

Es wurde wie in Beispiel 1 beschrieben verfahren, jedoch ohne Zusatz von $Ba(OH)_2 \cdot 8 H_2O$. Die Prüfergebnisse sind in der Tabelle angegeben.

Tabelle

| | Beispiel 1 | | | Beispiel 2 | | |
|---|---|---|---|---|---|---|
| | a | b | c | a | b | c |
| **Unsatiniert:** | | | | | | |
| Rauhigkeit Rz ($\mu$m) | 0,35 | 0,36 | 0,34 | 0,35 | 0,34 | 0,36 |
| **Satiniert:*** | | | | | | |
| Koerzitivfeldstärke (kA/m) | 29,8 | 29,7 | 29,8 | 29,7 | 29,8 | 29,8 |
| remanente Magnetisierung (mT) | 157 | 159 | 158 | 158 | 160 | 160 |
| relative Remanenz | 0,84 | 0,84 | 0,84 | 0,84 | 0,84 | 0,84 |
| Richtfaktor | 2,2 | 2,2 | 2,2 | 2,2 | 2,2 | 2,2 |
| SFD (Schaltfeldverteilung) | 0,26 | 0,25 | 0,26 | 0,26 | 0,25 | 0,26 |
| **Elektroakustische Daten** | | | | | | |
| **gegen Bezugsband IEC I:** | | | | | | |
| Empfindlichkeit 315 Hz (dB) | 0 | 0,1 | 0 | 0 | 0 | - 0,1 |
| Empfindlichkeit 10 kHz " | 1,5 | 1,6 | 1,5 | 1,5 | 1,7 | 1,6 |
| Aussteuerbarkeit 315 Hz " | 0 | 0,2 | 0 | 0 | 0,1 | 0 |
| Aussteuerbarkeit 10 kHz " | 2,0 | 2,1 | 2,0 | 2,0 | 2,0 | 1,9 |
| **Mechanische Eigenschaften:** | | | | | | |
| **Reibungskoeffizient Schicht/** | | | | | | |
| Stahl | 0,31 | 0,30 | 0,30 | 0,31 | 0,29 | 0,30 |
| quasistatische Reibung | 0,21 | 0,20 | 0,22 | 0,22 | 0,23 | 0,23 |
| **Abriebverhalten am Recorder:** | | | | | | |
| Lebensdauer Durchläufe | >100 | >100 | >100 | >100 | >100 | >100 |
| Ablagerungen Löschkopf | 2,5 | 2 | 2 | 2,5 | 2,5 | 2 |
| Tonkopf | 2,5 | 2,5 | 2 | 2,5 | 2 | 2,5 |
| Tonwelle | 1 | 1 | 1 | 1 | 1 | 1 |
| **Wechselklimatest:** | | | | | | |
| Ausfallzeit in % | 10 | 0 | 0 | 10 | 0 | 0 |
| **Blockiertest:** | | | | | | |
| unmittelbar Blockierer | 50 % | 0 | 0 | 70 % | 0 | 0 |
| Abrieb | kein | kein | kein | kein | kein | kein |
| akklimatisiert Blockierer | 0 | 0 | 0 | 0 | 0 | 0 |
| Abrieb | kein | kein | kein | kein | kein | kein |

* Magnetschichtdicke 4,5 $\mu$m

Tabelle Forts.

|                                          | Beispiel 3 | | | Beispiel 4 | | |
|------------------------------------------|------|------|------|------|------|------|
|                                          | a    | b    | c    | a    | b    | c    |
| **Unsatiniert:**                         |      |      |      |      |      |      |
| Rauhigkeit Rz ($\mu$m)                   | 0,34 | 0,33 | 0,35 | 0,35 | 0,34 | 0,35 |
| **Satiniert:*** |      |      |      |      |      |      |
| Koerzitivfeldstärke (kA/m)               | 29,9 | 29,7 | 29,8 | 29,8 | 29,7 | 29,6 |
| remanente Magnetisierung (mT)            | 157  | 159  | 159  | 156  | 158  | 157  |
| relative Remanenz                        | 0,84 | 0,84 | 0,84 | 0,84 | 0,84 | 0,84 |
| Richtfaktor                              | 2,2  | 2,1  | 2,2  | 2,1  | 2,2  | 2,2  |
| SFD (Schaltfeldverteilung)               | 0,26 | 0,26 | 0,26 | 0,26 | 0,25 | 0,26 |
| **Elektroakustische Daten gegen Bezugsband IEC I:** |      |      |      |      |      |      |
| Empfindlichkeit 315 Hz   (dB)            | 0    | 0,1  | 0,1  | 0    | 0,1  | - 0,1 |
| Empfindlichkeit   10 kHz   "             | 1,4  | 1,6  | 1,5  | 1,6  | 1,7  | 1,5  |
| Aussteuerbarkeit 315 Hz   "              | -0,1 | 0,1  | 0    | -0,1 | 0    | 0    |
| Aussteuerbarkeit 10 kHz   "              | 2,1  | 2,1  | 1,9  | 1,9  | 2,0  | 2,0  |
| **Mechanische Eigenschaften:** |      |      |      |      |      |      |
| Reibungskoeffizient Schicht/ Stahl       | 0,32 | 0,30 | 0,33 | 0,33 | 0,32 | 0,32 |
| quasistatische Reibung                   | 0,21 | 0,24 | 0,23 | 0,22 | 0,24 | 0,22 |
| **Abriebverhalten am Recorder:** |      |      |      |      |      |      |
| Lebensdauer Durchläufe                   | >100 | >100 | >100 | >100 | >100 | >100 |
| Ablagerungen Löschkopf                   | 2,5  | 2,5  | 2,5  | 3    | 2,5  | 2,5  |
| Tonkopf                                  | 2,5  | 2    | 2,5  | 2    | 2,5  | 2    |
| Tonwelle                                 | 1    | 1    | 1    | 1    | 1    | 1    |
| **Wechselklimatest:** |      |      |      |      |      |      |
| Ausfallzeit in %                         | 30   | 0    | 0    | 25   | 0    | 0    |
| **Blockiertest:** |      |      |      |      |      |      |
| unmittelbar Blockierer                   | 20 % | 0    | 0    | 40 % | 0    | 0    |
| Abrieb                                   | kein | kein | kein | kein | kein | kein |
| akklimatisiert Blockierer                | 0    | 0    | 0    | 0    | 0    | 0    |
| Abrieb                                   | kein | kein | kein | kein | kein | kein |

* Magnetschichtdicke 4,5 $\mu$m

Tabelle Forts.

|  | Beispiel 5 | | | Beispiel 6 | | |
|---|---|---|---|---|---|---|
|  | a | b | c | a | b | c |
| **Unsatiniert:** | | | | | | |
| Rauhigkeit Rz (μm) | 0,36 | 0,36 | 0,35 | 0,35 | 0,33 | 0,34 |
| **Satiniert:*** | | | | | | |
| Koerzitivfeldstärke (kA/m) | 29,7 | 29,6 | 29,8 | 29,8 | 29,9 | 29,7 |
| remanente Magnetisierung (mT) | 158 | 159 | 157 | 157 | 159 | 158 |
| relative Remanenz | 0,84 | 0,84 | 0,84 | 0,84 | 0,84 | 0,84 |
| Richtfaktor | 2,2 | 2,2 | 2,1 | 2,2 | 2,2 | 2,2 |
| SFD (Schaltfeldverteilung) | 0,26 | 0,25 | 0,25 | 0,25 | 0,26 | 0,26 |
| **Elektroakustische Daten gegen Bezugsband IEC I:** | | | | | | |
| Empfindlichkeit 315 Hz (dB) | 0 | 0 | -0,1 | -0,1 | 0 | -0,1 |
| Empfindlichkeit 10 kHz " | 1,6 | 1,7 | 1,4 | 1,5 | 1,6 | 1,4 |
| Aussteuerbarkeit 315 Hz " | -0,1 | 0,1 | 0,1 | 0 | 0 | -0,1 |
| Aussteuerbarkeit 10 kHz " | 1,8 | 2,0 | 2,1 | 2,0 | 2,0 | 1,9 |
| **Mechanische Eigenschaften:** | | | | | | |
| Reibungskoeffizient Schicht/ Stahl | 0,32 | 0,33 | 0,32 | 0,30 | 0,30 | 0,32 |
| quasistatische Reibung | 0,25 | 0,22 | 0,22 | 0,21 | 0,22 | 0,22 |
| **Abriebverhalten am Recorder:** | | | | | | |
| Lebensdauer Durchläufe | >100 | >100 | >100 | >100 | >100 | >100 |
| Ablagerungen Löschkopf | 3 | 3 | 2,5 | 3 | 2,5 | 2,5 |
| Tonkopf | 2,5 | 2 | 2,5 | 2 | 2 | 2 |
| Tonwelle | 1 | 1 | 1 | 1 | 1 | 1 |
| **Wechselklimatest:** | | | | | | |
| Ausfallzeit in % | 10 | 0 | 0 | 20 | 0 | 0 |
| **Blockiertest:** | | | | | | |
| unmittelbar Blockierer | 60 % | 0 | 0 | 80 % | 0 | 0 |
| Abrieb | kein | kein | kein | kein | kein | kein |
| akklimatisiert Blockierer | 0 | 0 | 0 | 0 | 0 | 0 |
| Abrieb | kein | kein | kein | kein | kein | kein |

* Magnetschichtdicke 4,5 μm

Tabelle Forts.

|  | Vergleichs-versuch |
|---|---|
| **Unsatiniert:** | |
| Rauhigkeit Rz ($\mu$m) | 0,35 |
| | |
| **Satiniert:*** | |
| Koerzitivfeldstärke (kA/m) | 29,7 |
| remanente Magnetisierung (mT) | 157 |
| relative Remanenz | 0,84 |
| Richtfaktor | 2,1 |
| SFD (Schaltfeldverteilung) | 0,26 |
| | |
| **Elektroakustische Daten** | |
| gegen Bezugsband IEC I: | |
| Empfindlichkeit 315 Hz (dB) | -0,2 |
| Empfindlichkeit 10 kHz " | 1,4 |
| Aussteuerbarkeit 315 Hz " | -0,2 |
| Aussteuerbarkeit 10 kHz " | 1,8 |
| | |
| **Mechanische Eigenschaften:** | |
| Reibungskoeffizient Schicht/ | |
| Stahl | 0,35 |
| quasistatische Reibung | 0,23 |
| | |
| **Abriebverhalten am Recorder:** | |
| Lebensdauer Durchläufe | >100 |
| Ablagerungen Löschkopf | 3 |
| Tonkopf | 3 |
| Tonwelle | 1 |
| | |
| **Wechselklimatest:** | |
| Ausfallzeit in % | 75 |
| | |
| **Blockiertest:** | |
| unmittelbar Blockierer | 100 % |
| Abrieb | |
| akklimatisiert Blockierer | 50 % |
| Abrieb | stark |

\* Magnetschichtdicke 4,5 $\mu$m

**Patentansprüche**

Magnetische Aufzeichnungsträger, bestehend aus einem nichtmagnetischen Trägermatierial und mindestens einer darauf haftfest aufgebrachten magnetisierbaren Schicht auf der Basis von in einem Polymerbindemittel, Gleitmittel und weiteren übliche Zusatzstoffen feinverteilten magnetischen Material, <u>dadurch gekennzeichnet</u>, daß als weiterer Zusatzstoff mindestens eine Verbindung aus der Gruppe der Oxide, Hydroxide und Carbonate des Bariums und Calciums in einer Menge von 0,5 bis 4 Gew.%, bezogen auf die Menge an magnetischem Material, zugesetzt wird.

**Claims**

A magnetic recording medium consisting of a non-magnetic base and, firmly bonded thereto, one or more magnetizable layers based on magnetic material finely dispersed in a polymer binder, a lubricant and other conventional additives, wherein one or more compounds from the group consisting of the oxides, hydroxides and carbonates of barium and calcium are added, in a amount of from 0.5 to 4% by weight, based on the amount of magnetic material, as a further additive.

**Revendications**

Support d'enregistrement magnétique constitué d'un matériau support non magnétique et d'au moins une couche magnétisable, appliquée fixe par adhérence sur celui-ci, à base d'un matériau magnétique finement réparti dans un liant polymère, lubrifiant et autres additifs usuels, caractérisé par le fait que, comme autres additifs, est ajouté au moins un composé du groupe des oxydes, hydroxydes et carbonates de barium et du calcium en proportion de 0,5 à 4% en poids, rapportée à la quantité de matériau magnétique.